# FASCICULE DE BREVET EUROPEEN

(11) **EP 1 686 758 B1**
(45) Date de publication et mention de la délivrance du brevet: **06.04.2011**
(21) Numéro de dépôt: 06100494.1
(22) Date de dépôt: 18.01.2006
(51) Int. Cl.: H04L 29/06, H04L 12/22

(54) **Système sécurisé d'interconnexion monodirectionnelle**
Gesichertes System zur Einwegverbindung
Secured one-way interconnection system

(30) Priorité: 28.01.2005 FR 0500893
(43) Date de publication de la demande: 02.08.2006
(73) Titulaire: THALES, 92200 Neuilly sur Seine (FR)
(72) Inventeur: Alcouffe, Fabien, 92700 Colombes (FR)
(74) Mandataire: Dudouit, Isabelle

(56) Documents cités:
- US-A- 4 590 417
- US-A- 5 099 214
- US-A- 6 108 787
- US-A1- 2002 112 181
- US-A1- 2005 044 407
- "Intrusion-Alarmed Fiber Optic Communication Link Using a Planar Waveguide Bimodal Launcher" JOURNAL OF LIGHTWAVE TECHNOLOGY, vol. 20, no. 1, janvier 2002 (2002-01), XP002347212

## Description

L'objet de la présente invention concerne un système d'interconnexion monodirectionnel, par exemple d'un système A de niveau de sécurité bas à un système B de niveau de sécurité haute. Le système garantit ainsi la non-transmission (volontaire ou non) d'informations physiques et/ou logiques de B vers A.

De manière plus générale, l'invention s'applique dans tout système comprenant plusieurs systèmes de niveaux de sécurité différents ou égaux, où l'on souhaite restreindre la transmission d'informations dans un sens, par exemple, d'un système de niveau de sécurité N-1 vers un système de niveau de sécurité N.

Elle est utilisée, par exemple, pour l'interconnexion de deux entités A et B, tels que des ordinateurs, des réseaux, différentes couches réseaux, etc.

Dans le cadre d'échanges d'informations monodirectionnels entre systèmes, il est nécessaire de permettre le transfert d'informations d'un système A vers un système B, par exemple, tout en garantissant la non transmission volontaire ou intempestive d'informations d'un système B ayant un niveau de sécurité haut vers un système A ayant un niveau de sécurité bas, en comparaison du niveau de sécurité du système A.

Actuellement, le contrôle de ces échanges peut être effectué dans le cadre des réseaux protocoles internet IP par un pare-feu. Il existe, toutefois, de nombreuses menaces liées à l'utilisation d'une telle solution. On peut citer : le piégeage du logiciel du pare-feu, la prise de contrôle et la modification des règles de filtrage du pare-feu, le piégeage du matériel du pare-feu, l'erreur de configuration des règles de filtrage, l'erreur de codage, l'exploitation de failles du logiciel, l'exploitation des signaux électromagnétiques par rayonnement ou conduction.

Le brevet US-A-6 108 787 divulgue un système permettant de contrôler les flux d'information circulant entre deux systèmes informatique. Pour cela, le système utilise une diode qui reçoit l'informatioon d'un premier réseau et la transmet vers un deuxième réseau. Le contrôle de circulation du flux se fait au moyen d'un commutateur qui possède deux états.

Le document US 2002/112181 divulgue un système d'accès sécurisé mutil niveaux. Le système comporte une unité de commutation.

L'invention concerne un système sécurisé d'interconnexion monodirectionnelle selon la revendication 1.

Le moyen de liaison est, par exemple, une fibre optique équipée d'un ou plusieurs isolateurs optiques.

L'isolateur peut être un isolateur passif à niveau d'atténuation constant.

Le système selon l'invention présente notamment les avantages suivants :
- Il permet le transfert d'informations de façon monodirectionnel du système de niveau le plus bas A vers le système de niveau plus haut B et interdit, en fonctionnement normal, le transfert logique et/ou physique d'informations de B vers A, que ce transfert soit volontaire ou non (du fait du piégeage du système B par exemple) ;
- La solution proposée est passive et ne nécessite pas, en fonctionnement normal, de source d'énergie, elle met en oeuvre des matériaux non-conducteurs et insensibles aux rayonnements électromagnétiques ;
- La solution proposée est indépendante du type de protocole de communication utilisé pour le transfert de A vers B (IP (protocole Internet), RS232, ARINC, ...);
- Elle offre une simplicité et une facilité de mise en oeuvre, un très haut niveau de sécurité, une non sensibilité aux attaques informatiques et aux erreurs de conception, de fabrication ou de codage.

D'autres caractéristiques et avantages de la présente invention apparaîtront mieux à la lecture de la description qui suit d'un exemple de réalisation donné à titre non limitatif, annexée des figures qui représentent:
- La figure 1, un synoptique du système selon l'invention,
- La figure 2, un exemple d'architecture du système de la figure 1,
- La figure 3, un exemple d'application pour des échanges monodirectionnels entre deux réseaux de sensibilités différentes,
- La figure 4, une variante comprenant plusieurs systèmes communiquant avec un système de niveau de sécurité élevé,
- La figure 5, une variante de réalisation pour des échanges bidirectionnels avec cloisonnement des flux montants et descendants.

La solution est basée notamment sur l'utilisation d'un brin de fibre optique et d'un isolateur optique.

Tout autre moyen présentant des caractéristiques fonctionnellement identiques ou sensiblement identiques à la fibre optique et à l'isolateur optique peuvent être utilisés.

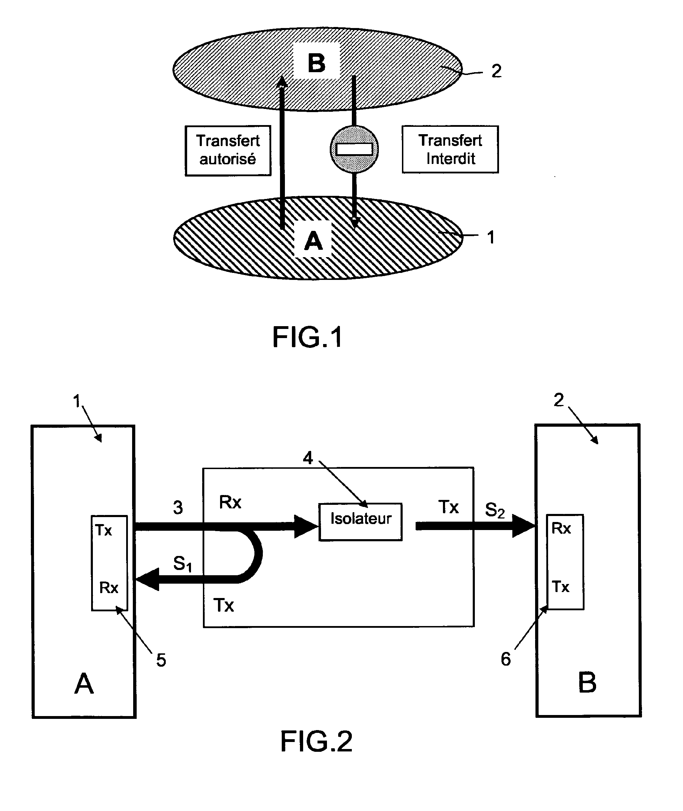

La figure 1 représente un système A, par exemple un ordinateur équipé d'un émetteur optique 1, et un système B, un autre ordinateur équipé d'un récepteur optique 2. Le niveau de sécurité du système A est un niveau bas par rapport au niveau de sécurité élevé associé au système B.

La figure 2 représente un exemple de système sécurisé d'interconnexion monodirectionnelle selon l'invention, où les systèmes A et B sont reliés au moyen d'une fibre optique 3 équipée d'un isolateur optique 4.

Les caractéristiques de l'isolateur sont choisies, par exemple, pour respecter la compatibilité avec l'ordinateur A et l'ordinateur B.

La lumière émise par le système A de niveau de sécurité bas est transmise par la fibre optique 3. L'isolateur 4 est adapté pour que, en fonctionnement normal, aucune information émise par le système B, suite à une erreur de branchement ou au piégeage du système B de niveau de sécurité haut ne puisse être exploitée par le système A. L'isolateur optique 4 permet notamment la transmission monodirectionnelle d'information entre deux réseaux.

La solution étant passive en fonctionnement normal, elle ne nécessite aucune alimentation électrique ou autre source d'énergie.

La fibre optique et l'isolateur optique utilisés sont électriquement et électromagnétiquement non-conducteurs et non rayonnants.

Une éventuelle panne dans le fonctionnement entraîne la perte de la fonction de transmission de A vers B.

L'émission de forte intensité de lumière par le système B conduit, par exemple, à la destruction de l'isolateur ce qui bloque toute transmission.

L'isolation obtenue avec les isolateurs du commerce est de l'ordre de 40dB et peut être augmentée par mise en série de plusieurs isolateurs. La solution peut être réalisée avec des isolateurs totalement passifs à niveau d'atténuation fixe ou avec des isolateurs à niveau d'atténuation ajustable, dans ce dernier cas la solution nécessite une alimentation électrique.

Le système selon l'invention est par exemple utilisé dans les applications suivantes : le transfert de fichiers, de messages, la réplication de base de données, la remontée d'alarmes centralisée, l'accès concomitant à des informations issues de différents systèmes cloisonnés, etc.

L'exemple donné à la figure 2 correspond à une implémentation dans le cadre de cartes réseaux optiques. Chacun des systèmes A et B sont équipés de carte réseau optique, 5, 6. Ces dernières proposent généralement une détection automatique de rupture des fibres optiques sur le connecteur Rx. Les cartes détectent la perte de réception du signal optique et émettent une alarme. La partie Rx réceptrice de la carte déclenche une alarme si elle ne reçoit plus une information issue du Tx de la carte émettrice. Cela permet de détecter un problème sur la chaîne de transmission émetteur, fibre, récepteur (le signal peut être une porteuse en continu ou un message émis à intervalle régulier). Dans l'exemple donné sur cette figure 2, une partie Si du signal émis est détournée pour la ré injecter dans la même carte 5, cela rend le système compatible avec toutes les catégories de carte et permet de vérifier que l'émetteur fonctionne correctement.

La solution proposée utilise une partie Si du signal émis T₁ par le système A et le lui retourne. Le système A va donc détecter le signal lumineux Si lui parvenant comme s'il était émis par le système B. Le reste du signal S₂ passe à travers l'isolateur 4 avant d'être transmis au système B. Ce montage présente notamment comme avantage de détecter une panne d'émission du système A, ce dernier recevant une partie de la lumière.

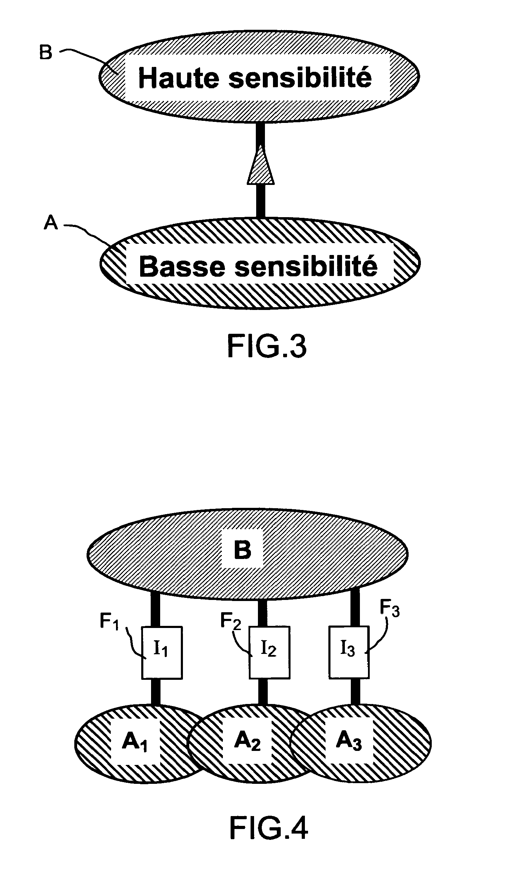

La figure 3 schématise un autre exemple de mise en oeuvre dans le cadre d'échanges monodirectionnels entre deux réseaux de sensibilités différentes. La solution garantie qu'aucune information du réseau le plus sensible, système B, n'est accessible à partir du réseau le moins sensible, système A. Une telle configuration s'applique, par exemple, pour la sauvegarde d'informations, la duplication de base de donnée, le flux vidéo.

La figure 4 représente une autre variante de réalisation mise en oeuvre dans le cadre de la concentration sur un système B d'informations issues de différents systèmes An, chacun de ces systèmes ayant un niveau de sécurité plus bas que le niveau de sécurité du système B.

Pour cela, chaque fibre optique Fi assurant la liaison entre un système Ai et le système B est équipée d'un isolateur optique li présentant des caractéristiques fonctionnelles identiques ou sensiblement identiques à celles décrites à la figure 2.

La solution garantit qu'aucune information du système B n'est accessible à partir des systèmes An et entre les différents systèmes An entre eux. L'invention s'applique notamment pour la sauvegarde d'informations, la concentration des informations de connexion (ou en abrégé log), la fusion de données.

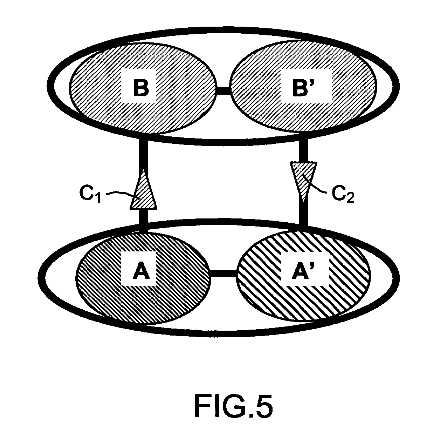

La figure 5 schématise une solution pouvant être mise en oeuvre dans le cadre d'échanges bidirectionnels avec cloisonnement des flux montants et descendants.

Cette solution permet de transmettre de l'information de B vers A, par exemple, un acquittement fonctionnel suite à la transmission d'une information de A vers B via un canal C₁ équipé d'un isolateur optique comme il a été décrit précédemment. La transmission de B vers A se fait via un canal différent de la transmission de A vers B. Cet autre canal mono directionnel C₂ fait transiter les informations de B vers un dispositif similaire B' qui renvoie l'information vers un dispositif A' par exemple au moyen d'une fibre optique équipée d'un isolateur non représentée. Les informations sont transmises ensuite vers le dispositif A.

Cette variante de réalisation permet de prendre en compte les menaces de type analyse de la topologie du système B à partir du système A par scan, les attaques de type protocolaire. Cela permet de mettre en oeuvre des solutions de filtrages indépendantes sur les deux sens de flux liées menaces associées étant différentes. Dans cet exemple les acquittements au niveau protocole de communication ne sont toujours pas possibles puisque le canal de communication est mono directionnel, par contre un autre canal mono directionnel permet un acquittement dit « fonctionnel » (par exemple l'envoi une information de réception de message).

## Revendications

1. Système sécurisé d'interconnexion monodirectionnelle comprenant au moins un système A de niveau de sécurité N_{A} et un système B de niveau de sécurité N_{B}, les deux systèmes échangeant des informations par un moyen de liaison physique (3), **caractérisé en ce que** :
o le moyen de liaison physique est équipé d'un dispositif isolateur optique (4) adapté à transmettre l'information du système du niveau de sécurité N_{A} vers le système de niveau de sécurité supérieur N_{B};
o chaque système A et B est équipé de carte réseau optique, (5, 6), chaque carte réseau optique comporte une partie réceptrice Rx et une partie émettrice,
o les cartes (5, 6) sont adaptées à détecter la perte de réception du signal optique et la partie Rx réceptrice de la carte à émettre une alarme si elle ne reçoit plus une information issue du Tx de la carte émettrice.

2. Système selon la revendication 1 **caractérisé en ce que**:
o une partie S₁ du signal T₁ est émis par le système A et le lui retourne pour la ré-injecter dans la même carte (5),
o le système A détecte le signal lumineux S₁ lui parvenant comme s'il était émis par le système B,
o le reste du signal S₂ passe à travers l'isolateur optique (4) avant d'être transmis au système B.

3. Système selon la revendication 1 **caractérisé en ce que** le niveau de sécurité N_{A} est inférieur au niveau de sécurité N_{B}.

4. Système selon la revendication 1 **caractérisé en ce que** le moyen de liaison est une fibre optique équipée d'un ou plusieurs isolateurs optiques.

5. Système selon la revendication 1 **caractérisé en ce que** l'isolateur est un isolateur passif à niveau d'atténuation constant.

6. Système selon la revendication 1 **caractérisé en ce que** l'isolateur est à niveau d'atténuation ajustable.

7. Système selon la revendication 1 **caractérisé en ce que** chaque système A et B est équipé de moyens de détection automatique de rupture de fibre.

8. Système selon la revendication 1 **caractérisé en ce qu'**il comporte plusieurs systèmes An de niveaux plus bas que le système B, chaque système An communiquant avec le système B par une liaison physique, Fi, et **en ce que** chaque liaison physique est équipée d'un isolateur, Ii.

## Claims

1. A secured one-way interconnection system comprising at least one system A of security level N_{A} and one system B of security level N_{B}, the two systems exchanging information through a means of physical connection (3), **characterised in that**:
- the means of physical connection is fitted with an optical isolator device (4) designed to transmit information from the security level N_{A} system toward the higher security level N_{B} system;
- each system A and B is fitted with an optical network card, (5, 6), each optical network card comprising a receiving portion Rx and an emitting portion;
- the cards (5, 6) are adapted to detect the loss of reception of the optical signal and the receiving portion Rx of the card to emit an alarm if it no longer receives information from the Tx of the emitting card.

2. The system according to claim 1, **characterised in that**:
- a portion S₁ of the signal T₁ is emitted by the system A and returns thereto in order to be re-injected into the same card (5),
- the system A detects luminous light signal S₁ associated therewith as if it had been emitted by system B,
- the rest of the signal S₂ passes through the optical isolator (4) before being transmitted to system B.

3. The system according to claim 1, **characterised in that** security level N_{A} is lower than security level N_{B}.

4. The system according to claim 1, **characterised in that** the connection means is an optical fibre fitted with one or more optical isolators.

5. The system according to claim 1, **characterised in that** the isolator is a passive isolator with a constant attenuation level.

6. The system according to claim 1, **characterised in that** the isolator is an adjustable attenuation level isolator.

7. The system according to claim 1, **characterised in that** each system A and B is fitted with means for automatically detecting a fibre break.

8. The system according to claim 1, **characterised in that** it includes several systems An with a level lower than that of system B, each system An communicating with system B via a physical connection, Fi and **in that** each physical connection is fitted with an isolator, li.

## Patentansprüche

1. Gesichertes System zur Einwegverbindung, das wenigstens ein System A mit Sicherheitsstufe N_{A} und ein System B mit Sicherheitsstufe N_{B} umfasst, wobei die beiden Systeme Informationen über ein physisches Verbindungsmittel (3) austauschen, **dadurch gekennzeichnet, dass**:
- das physische Verbindungsmittel mit einer optischen Isolatorvorrichtung (4) zum Senden von Informationen von dem System mit Sicherheitsstufe N_{A} zu dem System mit der höheren Sicherheitsstufe N_{B} ausgestattet ist;
- jedes System A und B mit einer optischen Netzwerkkarte (5, 6) ausgestattet ist, wobei jede optische Netzwerkkarte einen Empfangsteil Rx und einen Emitterteil umfasst;
- die Karten (5, 6) zum Erfassen des Verlusts des Empfangs des optischen Signals und der Empfangsteil Rx der Karte zum Aussenden eines Alarms ausgelegt sind, wenn er keine Informationen mehr vom Tx der Emitterkarte erhält.

2. System nach Anspruch 1, **dadurch gekennzeichnet, dass**:
- ein Teil S₁ des Signals T₁ vom System A emittiert wird und dorthin zurückkehrt, um erneut in dieselbe Karte (5) injiziert zu werden,
- das System A sein zu ihm gehörendes Lichtsignal S₁ erkennt, als wenn es vom System B emittiert worden wäre,
- der Rest des Signals S₂ durch den optischen Isolator (4) passiert, bevor er zum System B gesendet wird.

3. System nach Anspruch 1, **dadurch gekennzeichnet, dass** Sicherheitsstufe N_{A} niedriger ist als Sicherheitsstufe N_{B}.

4. System nach Anspruch 1, **dadurch gekennzeichnet, dass** das Verbindungsmittel eine Optofaser ist, die mit einem oder mehreren optischen Isolatoren ausgestattet ist.

5. System nach Anspruch 1, **dadurch gekennzeichnet, dass** der Isolator ein passiver Isolator mit konstantem Dämpfungspegel ist.

6. System nach Anspruch 1, **dadurch gekennzeichnet, dass** der Isolator ein Isolator mit verstellbarem Dämpfungspegel ist.

7. System nach Anspruch 1, **dadurch gekennzeichnet, dass** System A und B jeweils mit Mitteln zum automatischen Erkennen eines Bruchs der Faser ausgestattet sind.

8. System nach Anspruch 1, **dadurch gekennzeichnet, dass** es mehrere Systeme An mit einer niedrigeren Stufe als System B umfasst, wobei jedes System An mit System B über eine physische Verbindung Fi kommuniziert, und dadurch, dass jede physische Verbindung mit einem Isolator li ausgestattet ist.
